# FASCICULE DE BREVET EUROPEEN

(11) **EP 0 944 791 B1**
(45) Date de publication et mention de la délivrance du brevet: **09.10.2002**
(21) Numéro de dépôt: 97951331.4
(22) Date de dépôt: 15.12.1997
(51) Int. Cl.: F16J 15/06, H02G 3/08

(54) **JOINT DESTINE A ETRE DISPOSE CIRCONFERENTIELLEMENT AUTOUR D'UN ELEMENT GLOBALEMENT CYLINDRIQUE**
UM EIN ZYLINDRISCHES ELEMENT ANGEORDNETE DICHTUNG
JOINT TO BE ARRANGED AROUND THE CIRCUMFERENCE OF A GLOBALLY CYLINDRICAL ELEMENT

(30) Priorité: 23.12.1996 FR 9615831
(43) Date de publication de la demande: 29.09.1999
(73) Titulaire: POUYET S.A., 94207 Ivry sur Seine (FR)
(72) Inventeur: DESARD, Christophe, F-44410 Herbignac (FR)
(74) Mandataire: Vuillermoz, Bruno
(86) Numéro de dépôt international: FR9702295
(87) Numéro de publication internationale: WO98028558

(56) Documents cités:
- EP-A- 0 695 900
- FR-A- 2 572 156
- US-A- 5 149 108

## Description

La présente invention concerne d'une manière générale un joint d'étanchéité, et plus particulièrement un joint destiné à réaliser l'étanchéité autour d'un élément globalement cylindrique traversant une ouverture pratiquée dans deux éléments se positionnant l'un sur l'autre pour former une enveloppe fermée, ou dans un seul élément formé de manière à pouvoir s'ouvrir élastiquement le long d'un bord pour libérer l'élément globalement cylindrique.

De tels joints d'étanchéité se trouvent autour des câbles entrant ou sortant d'une boîte de raccordement. Ils traversent des orifices formés en partie dans le fond de la boîte et en partie dans le couvercle de celle-ci.

De tels joints sont également utilisés autour des disques des manchons de protection mis en oeuvre pour isoler de l'environnement les extrémités raccordées de câbles, par exemple des câbles d'un réseau de communication. Ces manchons comportent usuellement deux disques disposés autour des câbles entrant et des câbles sortant et une enveloppe globalement cylindrique positionnée autour desdits disques pour fermer de manière étanche l'espace compris entre ces disques dans lequel est réalisé le raccordement des câbles. L'enveloppe peut être réalisée en une seule pièce fendue longitudinalement qui est assez élastique pour que l'on puisse écarter la fente pour positionner l'enveloppe autour des disques ou la retirer. L'enveloppe peut également être réalisée en deux pièces se positionnant de part et d'autre des disques.

Les boîtes de raccordement et les manchons de protection, ainsi que les autres dispositifs de configuration semblables doivent parfois être ouverts pour modifier les connexions qu'ils renferment. Lors de ces interventions, il est souvent nécessaire de pouvoir enlever les câbles, les disques. ou tout autre élément entouré circonférentiellement par un joint d'étanchéité.

Les joints usuellement mis en oeuvre sont continus ce qui ne permet pas d'intervenir sur l'élément qu'ils entourent sans les découper.

Le personnel d'intervention doit alors couper le joint aussi proprement que possible puis coller bout à bout les extrémités du joint après l'intervention.

Ces opérations toujours délicates à réaliser même dans l'environnement favorable d'un atelier sont difficilement menées à bien lorsqu'elles doivent être réalisées en haut d'un poteau ou dans une galerie.

Il a également été proposé, par exemple dans le DE 27 42 760 et dans le FR 2 399 752 des joints plats dont les extrémités doivent être collées l'une sur l'autre lors du montage. Lors d'une intervention il faut soit décoller les extrémités, soit découper le joint en un autre point.

Comme état de la technique peuvent encore être cités les documents EP-A-0.695.900, FR-A-2.572.156, et US-A-5.149.108, qui montrent qu'est connu un joint destiné a être enroulé circonférentiellement autour d'un élément sensiblement cylindrique, les extrémités dudit joint selon l'axe longitudinal du joint comportant des moyens emboîtables les uns dans les autres de manière démontable afin de pouvoir être accrochées l'une à l'autre, ou décrochées.

La présente invention tend à résoudre ce problème en proposant un joint destiné a être enroulé circonférentiellement autour d'un élément sensiblement cylindrique, les extrémités dudit joint selon l'axe longitudinal du joint comportant des moyens emboîtables les uns dans les autres de manière démontable afin de pouvoir être accrochées l'une à l'autre, ou décrochées,
caractérisé
en ce que les moyens emboîtables comprennent, à chaque extrémité longitudinale du joint, une languette dépassante et une languette courte situées côte-à-côte et de part et d'autre de l'axe longitudinal, la languette dépassante étant plus longue longitudinalement que la languette courte,
en ce que les languettes dépassantes, et par conséquent les languettes courtes, des deux extrémités longitudinales du joint sont agencées de part et d'autre de l'axe longitudinal de manière à ce que la languette dépassante d'une extrémité s'emboîte avec la languette courte de l'autre extrémité lorsque le joint est enroulé sur l'élément sensiblement cylindrique.
et en ce que les languettes dépassantes et courtes portent des moyens permettant leur accrochage et décrochage.

Le joint selon l'invention est encore remarquable en ce que :
■ la languette dépassante se termine par une pointe moins large et moins épaisse qu'elle,
■ la pointe est traversée par un orifice,
■ la pointe est disposée dans le prolongement de la surface supérieure du joint,
■ ladite languette courte présente un évidement de même forme et même épaisseur que la pointe,
■ un pion de même diamètre que l'orifice de la pointe est formé dans l'évidement,
■ la pointe et l'évidement sont respectivement raccordés aux bords latéraux du joint par des faces inclinées,
■ les extrémités présentent un ensemble de découpes concaves et convexes réalisées de manière symétrique de manière à pouvoir être positionnées les unes dans les autres lors de la fermeture du joint,
■ chacune des extrémités du joint présente des évidements tournés vers la face supérieure ou vers la face inférieure du joint,
■ les évidements tournés vers la face inférieure du joint sont formés dans des languettes dépassantes,
■ les évidements tournés vers la face supérieure du joint portent des pions tandis que les évidements tournés vers la face inférieure du joint ont leur paroi traversée par un orifice.

L'invention sera mieux comprise grâce à la description qui va suivre donnée à titre d'exemple non limitatif en référence aux dessins annexés dans lesquels :
- la figure 1 est une vue éclatée d'un manchon de protection,
- la figure 2 est une vue partielle de dessus d'un joint pour manchon mettant en oeuvre l'invention,
- la figure 3 représente un joint suivant l'invention adapté à être utilisé dans une boîte de raccordement,
- la figure 4 est une vue de dessus à grande échelle d'une extrémité d'un joint selon l'invention,
- la figure 5 est une vue en perspective et à grande échelle de l'extrémité représentée à la figure 4,
- la figure 6 est une vue en coupe suivant la ligne VI-VI de la figure 2,
- la figure 7 est une vue en coupe suivant la ligne VII-VII de la figure 2,
- les figures 8a et 9a sont des vues de côté de deux variantes de réalisation d'un joint suivant l'invention,
- les figures 8b et 9b sont des vues de dessus des joints représentés aux figures 8a et 9a.

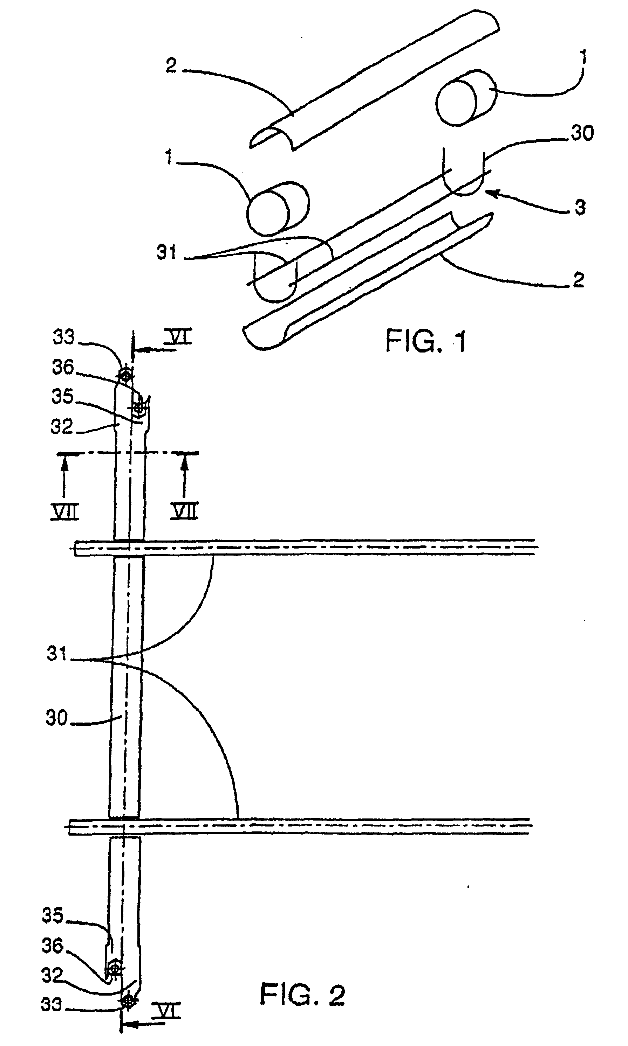

La figure 1 montre de manière schématique un manchon de protection utilisé pour la protection de raccordements réalisés entre des câbles.

De tels manchons comportent des disques 1 cylindriques usuellement conçus en au moins deux pièces afin d'être respectivement disposés autour des câbles disposés en amont et des câbles disposés en aval. Ces disques 1 sont enfermés dans une enveloppe représentée en deux parties 2 au dessin. La fermeture de l'enveloppe est réalisée de manière étanche afin de protéger les épissures réalisées entre les câbles des agressions externes.

L'étanchéité entre les deux parties 2 de l'enveloppe ainsi qu'entre chacune des parties de l'enveloppe et un disque 1 peut être réalisée à l'aide d'un joint 3 comportant deux joints rectilignes 31 destinés à être positionnées le long des ouvertures longitudinales des parties d'enveloppe et deux joints circonférentiels 30 destinés à être positionnés autour des disques 1.

La figure 2 représente le joint 3 de la figure 1 disposé à plat, suivant l'invention, les extrémités des joints circonférentiels 30 sont conformées de manière à pouvoir être accrochées l'une à l'autre ou décrochées.

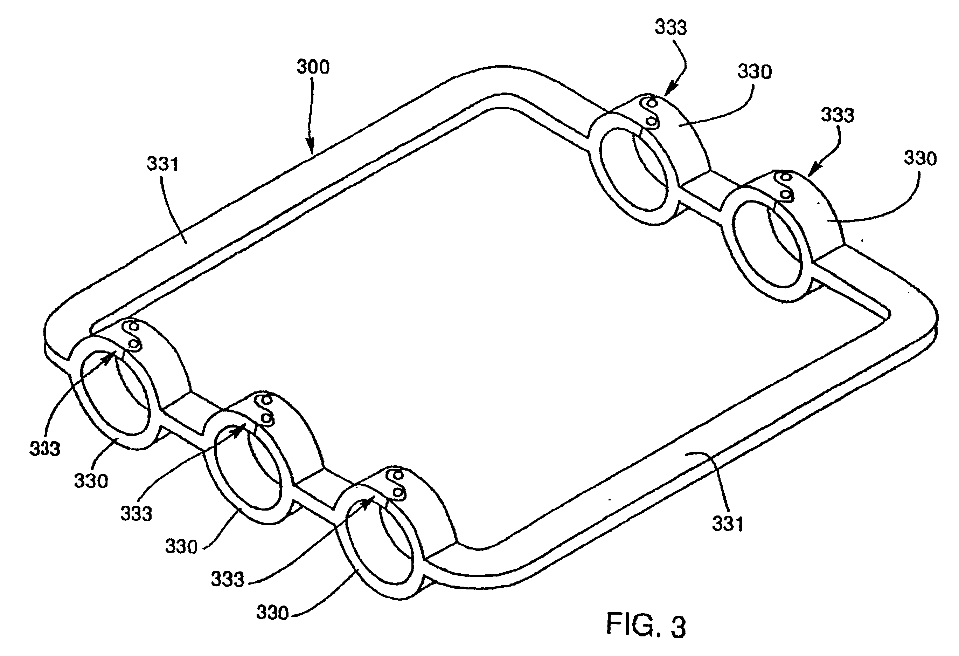

La figure 3 représente un joint 300 destiné à réaliser l'étancheité d'une boîte de raccordement non représentée. Ce joint 300 se compose de deux portions 331 destinées à être positionnées entre un couvercle et un fond de la boîte de raccordement et des portions 330 destinées à être positionnées autour des câbles entrant (ou sortant) dans la boîte, entre lesdits câbles et les portions d'orifices créées dans le couvercle et le fond de boîte afin d'assurer l'étanchéité des passages de câbles.

Suivant l'invention, les extrémités du joint 30 de la figure 2 et des portions 330 de la figure 3 comportent des moyens 32, 36 et 333 emboîtables les uns dans les autres de manière démontable.

Dans l'exemple de réalisation des figures 2 à 7, les extrémités du joint sont découpées suivant l'axe longitudinal XX du joint de manière à former une languette dépassante 32, les languettes dépassantes 32 des deux extrémités du joint 30 étant disposées de part et d'autre dudit axe longitudinal XX.

Le joint 30 présente ainsi l'apparence de deux joints disposés l'un contre l'autre le long de l'axe longitudinal XX tout en étant décalés longitudinalement.

La languette dépassante 32 se termine dans l'exemple représenté au dessin par une pointe 33 moins large et moins épaisse qu'elle et traversée par un orifice 34. La pointe 33 est disposée dans le prolongement de la surface supérieure du joint. Pour des raisons qui seront mieux comprises plus loin, l'extrémité inférieure de l'orifice 34 est chanfreinée.

Le joint 30 comporte une languette courte 35 disposée à côté de chaque languette dépassante 32. La languette courte 35 présente un évidement 36 de même forme et même épaisseur que la pointe 33 dans lequel est formé un pion 37 de même diamètre que l'orifice 34.

La pointe 33 et l'évidement 36 sont respectivement raccordés aux bords latéraux du joint 30 par des faces inclinées 38 et 39.

Lors de la mise en place du joint circonférentiel 30 autour d'un disque, sa partie courante est disposée dans la rainure portée à cet effet par la paroi périphérique du disque, ou du passage de câble de la boîte de raccordement, puis chacune des pointes 33 des languettes dépassantes 32 est disposée au-dessus de l'évidement 36 de la languette courte 35 qui lui fait face . Les pions 37 sont introduits dans les orifices 34 de manière à maintenir les deux extrémités du joint accrochées l'une à l'autre. L'insertion desdits pions 37 est facilitée par la présence de chanfreins à l'extrémité inférieure des orifices 34.

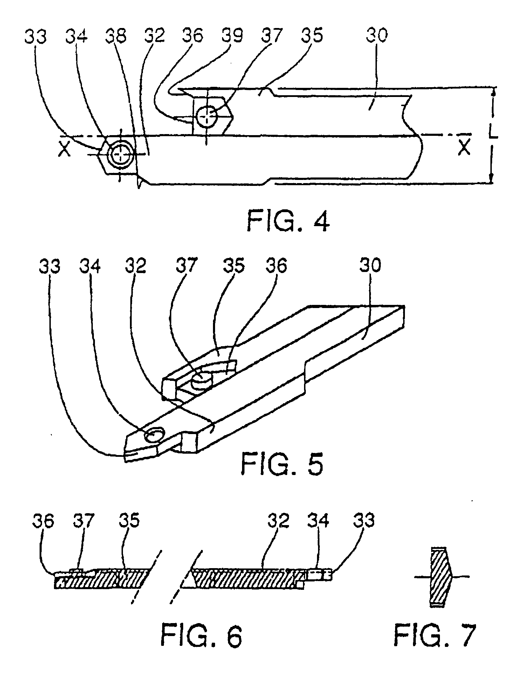

Le joint représenté au dessin est, comme visible à la figure 7, plus épais le long de l'axe longitudinal XX que sur les bords, son épaisseur maximale étant supérieure à la profondeur de la rainure formée dans le disque, ou dans le passage de câble de la boîte de raccordement.

Il est également plus large dans ses zones d'extrémités formées par les languettes 32 et 35 que dans sa zone médiane.

La largeur L des zones d'extrémités est égale à la largeur de la rainure prévue pour la mise en place du joint circonférentiel 30.

Par ces dispositions, l'étanchéité est réalisée par l'appui de la face inférieure plane du joint contre le fond de la rainure et l'écrasement de sa partie axiale. Comme visible à la figure 7, la face supérieure du joint est constituée par deux plans inclinés se raccordant le long de l'axe longitudinal XX, ce qui permet de concentrer l'effort de compression sur le centre du joint et de réduire l'effort de fermeture de l'enveloppe ou du boîtier de raccordement.

Au niveau des extrémités accrochées l'une à l'autre du joint, la prévision d'une zone de largeur égale à la largeur de la rainure permet de serrer la zone d'accrochage entre le fond et les côtés de la rainure et la paroi de l'enveloppe (ou du câble). Les deux languettes dépassantes 32 sont ainsi maintenues en appui l'une contre l'autre le long de l'axe longitudinal XX. De même, les parois inclinées 38 et 39 en vis-à-vis sont forcées l'une contre l'autre, tandis que les pointes 33 sont forcées contre le fond des encoches 36.

On obtient ainsi une fermeture étanche du joint par la création d'une multiplicité de chicanes.

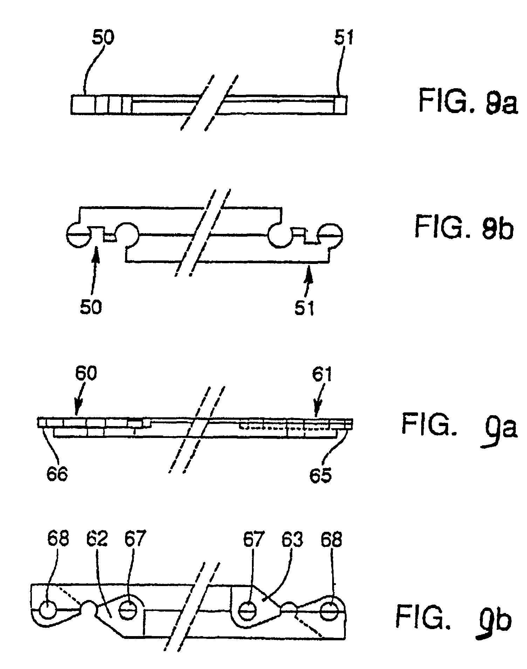

Les figures 8 et 9 montrent des variantes de réalisation du joint suivant l'invention.

Les figures 8a et 8b représentent un joint dont les extrémités 50 et 51 présentent un ensemble de découpes concaves et convexes. Les découpes sont réalisées de manière symétrique de manière à pouvoir être positionnées les unes dans les autres lors de la fermeture du joint.

Chacune des extrémités 60 et 61 du joint représenté aux figures 9a et 9b présenté des évidements tournés vers la face supérieure ou vers la face inférieure du joint. Les évidements 65 et 66 tournés vers la face inférieure du joint sont formés dans des languettes dépassantes. Les évidements 62 et 63 tournés vers la face supérieure du joint portent des pions 67 tandis que les évidements 65 et 66 tournés vers la face inférieure du joint ont leur paroi traversée par un orifice 68.

Dans l'exemple de réalisation représenté au dessin, les évidements ont globalement la forme d'un triangle.

Les évidements de chaque extrémité sont symétriques l'un de l'autre par rapport à un point situé sur l'axe longitudinal du joint.

## Revendications

1. Joint destiné a être enroulé circonférentiellement autour d'un élément sensiblement cylindrique, les extrémités dudit joint selon l'axe longitudinal (XX) du joint comportant des moyens emboîtables les uns dans les autres de manière démontable afin de pouvoir être accrochées l'une à l'autre, ou décrochées, **caractérisé**
**en ce que** les moyens emboîtables comprennent, à chaque extrémité longitudinale du joint, une languette dépassante (32) et une languette courte (35) situées côte-à-côte et de part et d'autre de l'axe longitudinal (XX), la languette dépassante (32) étant plus longue longitudinalement que la languette courte (35),
**en ce que** les languettes dépassantes (32), et par conséquent les languettes courtes (35), des deux extrémités longitudinales du joint sont agencées de part et d'autre de l'axe longitudinal (XX) de manière à ce que la languette dépassante (32) d'une extrémité s'emboîte avec la languette courte (35) de l'autre extrémité lorsque le joint est enroulé sur l'élément sensiblement cylindrique,
et **en ce que** les languettes dépassantes (32) et courtes (35) portent des moyens (34, 37) permettant leur accrochage et décrochage.

2. Joint selon la revendication 1, **caractérisé en ce que** la languette dépassante (32) se termine par une pointe (33) moins large et moins épaisse qu'elle.

3. Joint selon la revendication 2, **caractérisé en ce que** la pointe (33) est traversée par un orifice (34).

4. Joint selon la revendication 2 ou selon la revendication 3, **caractérisé en ce que** la pointe (33) est disposée dans le prolongement de la surface supérieure du joint.

5. Joint selon l'une quelconque des revendications 2 à 4, **caractérisé en ce que** ladite languette courte (35) présente un évidement (36) de même forme et même épaisseur que la pointe (33).

6. Joint selon la revendication 5, **caractérisé en ce qu'**un pion (37) de même diamètre que l'orifice (34) de la pointe (33) est formé dans l'évidement (36).

7. Joint selon la revendication 5 ou selon la revendication 6, **caractérisé en ce que** la pointe (33) et l'évidement (36) sont respectivement raccordés aux bords latéraux du joint (30) par des faces inclinées (38, 39).

8. Joint selon la revendication 1, **caractérisé en ce que** les extrémités (50, 51) présentent un ensemble de découpes concaves et convexes réalisées de manière symétrique de façon à pouvoir être positionnées les unes dans les autres lors de la fermeture du joint.

9. Joint selon la revendication 1, **caractérisé en ce que** chacune des extrémités (60, 61) du joint présente des évidements tournés vers la face supérieure ou vers la face inférieure du joint.

10. Joint selon la revendication 9, **caractérisé en ce que** les évidements (65, 66) tournés vers la face inférieure du joint sont formés dans des languettes dépassantes.

11. Joint selon la revendication 9, **caractérisé en ce que** les évidements (62, 63) tournés vers la face supérieure du joint portent des pions (67) tandis que les évidements (65, 66) tournés vers la face inférieure du joint ont leur paroi traversée par un orifice (68).

## Patentansprüche

1. Dichtung, die in Umfangsrichtung um ein im Wesentlichen zylindrisches Element herumwickelbar ist, wobei die Enden dieser Dichtung entlang der Längsachse (XX) der Dichtung Mittel aufweisen, die ineinander passbar sind, und zwar auf lösbare Art und Weise, so dass sie ineinander passbar und voneinander lösbar sind, **dadurch gekennzeichnet, dass** die ineinander passbaren Mittel an jedem Ende der Dichtung in Längsrichtung eine überstehende Zunge (32) und eine kurze Zunge (35) aufweisen, die nebeneinander und auf jeweils einer Seite der Längsachse (XX) vorgesehen sind, wobei die überstehende Zunge (32) in Längsrichtung länger ist als die kurze Zunge (35), und dass die überstehenden Zungen (32) und demzufolge die kurzen Zungen (35) der beiden Längsenden der Dichtung auf der einen und der anderen Seite der Längsachse (XX) so angeordnet sind, dass die überstehende Zunge (32) des einen Endes mit der kurzen Zunge (35) des anderen Endes zusammenpassbar ist, wenn die Dichtung um das im Wesentlichen zylindrische Elemente herumgewickelt wird, und dass die überstehenden Zungen (32) und kurzen Zungen (35) Mittel (34, 37) tragen, die ihr Ineinanderpassen und voneinander Lösen ermöglichen.

2. Dichtung nach Anspruch 1, **dadurch gekennzeichnet, dass** die überstehende Zunge (32) in einer Spitze (33) endet, die weniger breit und weniger dick ist als die Zunge selbst.

3. Dichtung nach Anspruch 2, **dadurch gekennzeichnet, dass** die Spitze (33) von einer Öffnung (34) durchquert wird.

4. Dichtung nach Anspruch 2 oder Anspruch 3, **dadurch gekennzeichnet, dass** die Spitze (33) in der Verlängerung der oberen Fläche der Dichtung angeordnet ist.

5. Dichtung nach einem der Ansprüche 2 bis 4, **dadurch gekennzeichnet, dass** die kurze Zunge (35) eine Ausnehmung (36) aufweist, die die gleiche Form und die gleiche Dicke hat wie die Spitze (33).

6. Dichtung nach Anspruch 5, **dadurch gekennzeichnet, dass** ein Stift (37) mit dem gleichen Durchmesser wie die Öffnung (34) der Spitze (33) in der Ausnehmung (36) ausgebildet ist.

7. Dichtung nach Anspruch 5 oder Anspruch 6, **dadurch gekennzeichnet, dass** die Spitze (33) und die Ausnehmung (36) an den Seitenkanten der Dichtung (30) über geneigte Flächen (38, 39) relativ zueinander anbringbar sind.

8. Dichtung nach Anspruch 1, **dadurch gekennzeichnet, dass** die Enden (50, 51) eine Anordnung aus konkaven und konvexen Ausschnitten aufweisen, die symmetrisch ausgebildet sind, so dass sie beim Schließen der Dichtung ineinander positionierbar sind.

9. Dichtung nach Anspruch 1, **dadurch gekennzeichnet, dass** jedes Ende (60, 61) der Dichtung Ausnehmungen aufweist, die in Richtung der oberen Fläche oder in Richtung der unteren Fläche der Dichtung gedreht sind.

10. Dichtung nach Anspruch 9, **dadurch gekennzeichnet, dass** die Ausnehmungen (65, 66), die in Richtung der unteren Fläche der Dichtung gedreht sind, in überstehenden Zungen ausgebildet sind.

11. Dichtung nach Anspruch 9, **dadurch gekennzeichnet, dass** die Ausnehmungen (62, 63), die in Richtung der oberen Fläche der Dichtung gedreht sind, Stifte (67) aufweisen, während die Ausnehmungen (65, 66), die in Richtung der unteren Fläche der Dichtung gedreht sind, eine Öffnung (68) in ihrer Wand aufweisen.

## Claims

1. Joint intended to be wound circumferentially around a substantially cylindrical element, the ends of said joint along the longitudinal axis (XX) of the joint comprising means able to be removably fitted in one another in order to be mutually attached or detached, **characterized**
**in that** the means able to be fitted comprises, at each longitudinal end of the joint, a projecting tongue (32) and a short tongue (35) located side by side and on either side of the longitudinal axis (XX), the projecting tongue (32) being longer, longitudinally, than the short tongue (35),
**in that** the projecting tongues (32), and consequently the short tongues (35), of the two longitudinal ends of the joint are arranged on either side of the longitudinal axis (XX) so that the projecting tongue (32) of one end fits with the short tongue (35) of the other end when the joint is wound on the substantially cylindrical element,
and **in that** the projecting (32) and short (35) tongues bear means (34, 37) allowing attachment and detachment thereof.

2. Joint according to Claim 1, **characterized in that** the projecting tongue (32) terminates in a tip (33) less wide and less thick than it.

3. Joint according to Claim 2, **characterized in that** the tip (33) is traversed by an orifice (34).

4. Joint according to Claim 2 or to Claim 3, **characterized in that** the tip (33) is disposed in line with the upper surface of the joint.

5. Joint according to any of the Claims 2 to 4, **characterized in that** said short tongue (35) presents a recess (36) of the same shape and same thickness as the tip (33).

6. Joint according to Claim 5, **characterized in that** a stud (37) with the same diameter as the orifice (34) of the tip (33) is formed in the recess (36).

7. Joint according to Claim 5 or to Claim 6, **characterized in that** the tip (33) and the recess (36) are respectively connected to the lateral edges of the joint (30) by inclined faces (38, 39).

8. Joint according to Claim 1, **characterized in that** the ends (50, 51) present an assembly of concave and convex cut-outs made symmetrically so as to be able to be positioned in one another during closure of the joint.

9. Joint according to Claim 1, **characterized in that** each of the ends (60, 61) of the joint presents recesses turned towards the upper face or towards the lower face of the joint.

10. Joint according to Claim 9, **characterized in that** the recesses (65, 66) turned towards the lower face of the joint are formed in projecting tongues.

11. Joint according to Claim 9, **characterized in that** the recesses (62, 63) turned towards the upper face of the joint bear studs (67) while the wall of the recesses (65, 66) turned towards the lower face of the joint is traversed by an orifice (68).
